(19)

Europäisches
Patentamt
European
Patent Office
Office européen
des brevets

(11) **EP 4 391 354 A1**

(12) **EUROPEAN PATENT APPLICATION**
published in accordance with Art. 153(4) EPC

(43) Date of publication:
**26.06.2024 Bulletin 2024/26**

(21) Application number: **22909318.2**

(22) Date of filing: **11.08.2022**

(51) International Patent Classification (IPC):
**H02P 21/14** (2016.01)    **H02P 21/22** (2016.01)

(86) International application number:
**PCT/CN2022/111852**

(87) International publication number:
**WO 2023/115989 (29.06.2023 Gazette 2023/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2021  CN 202111581140**

(71) Applicant: **BEIJING NATIONAL NEW ENERGY
VEHICLE TECHNOLOGY
INNOVATION CENTER CO., LTD.
Beijing 102600 (CN)**

(72) Inventors:
• **SHEN, Jinliang
  Beijing 102600 (CN)**

• **YANG, Lianghui
  Beijing 102600 (CN)**
• **LIU, Chaohui
  Beijing 102600 (CN)**
• **HUA, Yang
  Beijing 102600 (CN)**
• **XIONG, Liman
  Beijing 102600 (CN)**
• **XIU, Guidong
  Beijing 102600 (CN)**
• **YUAN, Chengyin
  Beijing 102600 (CN)**

(74) Representative: **Wächter, Jochen et al
Kroher-Strobel
Rechts- und Patentanwälte PartmbB
Bavariaring 20
80336 München (DE)**

(54) **MOTOR CONTROL METHOD, MOTOR, VEHICLE, STORAGE MEDIUM, AND COMPUTER**

(57)    The present invention relates to the technical field of motor control, in particular to a motor control method, a motor, a vehicle, a storage medium, and a computer. The motor control method implements the movement of a modulation interval of a voltage waveform by introducing online adjustment of a power factor angle, thereby ensuring that the action of a switching tube does not occur in a drive system under a large current, improving the driving efficiency of the system, and ensuring the universality of this solution.

FIG. 2

Processed by Luminess, 75001 PARIS (FR)

**Description**

**TECHNICAL FIELD**

The present invention relates to the technical field of motor control, in particular to a motor control method, a motor, a vehicle, a storage medium, and a computer.

**BACKGROUND**

With the development of new energy electrification, more and more vehicles now use motor drive controllers. However, conventional motor drive uses sine pulse width modulation (SPWM) with poor utilization of a bus voltage. In view of this, people further proposed continuous pulse width modulation (CPWM) and discontinuous pulse width modulation (DPWM) to improve the utilization of the bus voltage. SPWM and CPWM have more switching actions than DPWM within an operational control cycle. The action of a switching tube in DPWM is constantly variable. For example, during drive control in a DPWM1 mode, in order to ensure that a system has no switching action under the maximum current, it is required to use a constant power control mode and ensure that a power factor angle is always 1. For another example, in a DPWM2 mode, in order to ensure that the system has no switching action under the maximum current, the power factor angle of 0.866 needs to be ensured. However, the drive system for a new energy vehicle is variable in operating condition and time-varying in power factor angle. Therefore, DPWM cannot adapt to different load conditions to adjust an action time sequence of the switching tube, only can ensure that the action of the switching tube does not occur in the drive system under a high current in some particular conditions, and is not universal.

**SUMMARY**

In view of the technical problems to be solved, the present invention provides a motor control method, a motor, a vehicle, a storage medium, and a computer, which, by introducing online adjustment of a power factor angle, ensure that the action of a switching tube does not occur in a drive system under a high current, improve the driving efficiency of the system, and ensure the universality of this solution.

To solve the above technical problems, a first technical solution adopted by the present invention is as follows: A motor control method, including:

presetting a three-phase voltage of a motor to meet the requirements of a formula (1):

$$\begin{cases} u_{an} = U\cos\left(\omega t\right) + u_{zero} = u_{ao} + u_{zero} \\ u_{bn} = U\cos\left(\omega t - \frac{2}{3}\pi\right) + u_{zero} = u_{bo} + u_{zero} \\ u_{cn} = U\cos\left(\omega t + \frac{2}{3}\pi\right) + u_{zero} = u_{co} + u_{zero} \end{cases} \qquad \text{formula (1)}$$

presetting a three-phase current of the motor to meet the requirements of a formula (2):

$$\begin{cases} i_{an} = I\cos\left(wt + \varphi\right) \\ i_{bn} = I\cos\left(\omega t - \frac{2}{3}\pi + \varphi\right) + u_{zero} \\ i_{cn} = I\cos\left(\omega t + \frac{2}{3}\pi + \varphi\right) + u_{zero} \end{cases} \qquad \text{formula (2)}$$

where $\varphi$ is a power factor angle, and $u_{zero}$ is a zero sequence voltage component; and

adjusting an angle $\theta = \frac{\pi}{6} + \varphi$ to move a modulation interval of a voltage waveform.

Preferably, when the power factor angle is 0, a voltage output and a current output maintain a same phase; and a same zero sequence voltage is expressed as a formula (3):

$$\begin{cases} |u_{xo}| = \max \ (|u_{ao}|, |u_{bo}|, |u_{co}|) \\ u_{zero} = \ (\text{sgn} \ (v_{xo}) \ ) \frac{u_{dc}}{2} - u_{xo} \end{cases} \qquad \text{formula (3).}$$

Preferably, a command output voltage is expressed as a formula (4):

$$\begin{cases} u_{an} = u_{ao} \cos \ (\varphi) \ - \frac{(u_{co} - u_{bo})}{\sqrt{3}} \sin \ (\varphi) \\ u_{bn} = u_{bo} \cos \ (\varphi) \ + \left\{ \frac{1}{2} \frac{(u_{co} - u_{bo})}{\sqrt{3}} - \frac{\sqrt{3} u_{ao}}{2} \right\} \sin \ (\varphi) \qquad \text{formula (4).} \\ u_{cn} = u_{an} - u_{bn} \end{cases}$$

Preferably, when $u_{zero} = 0$, an SPWM control mode is used.

Preferably, when the SPWM control mode is used, a reference output voltage of a certain phase is within $\frac{1}{3}$ of a cycle.

Preferably, when $u_{zero} = u\cos(3\omega t)$, a space vector pulse width modulation (SVPWM) control mode is used.

To solve the above technical problems, a second technical solution adopted by the present invention is as follows: A motor including a motor controller and a motor system, where the motor controller controls operation of the motor system by the above motor control method.

To solve the above technical problems, a third technical solution adopted by the present invention is as follows: A vehicle including the above motor.

To solve the above technical problems, a fourth technical solution adopted by the present invention is as follows: A storage medium storing a computer program for executing the above motor control method.

To solve the above technical problems, a fifth technical solution adopted by the present invention is as follows: A computer including a memory, a processor, and a computer program stored on the memory and executable on the processor, where when the processor executes the computer program, the above motor control method is implemented.

The present invention has the following beneficial effects: the modulation interval of the voltage waveform is moved by adjusting the power factor angle in real time during the operation of the drive system of the motor; and it is ensured that the action of the switching tube does not occur at or near the peak of the motor current, thereby reducing the operating loss of the drive system, ensuring the maximum operating efficiency of the drive system, and prolonging the endurance mileage of a complete new energy vehicle.

**BRIEF DESCRIPTION OF THE DRAWINGS**

FIG. 1 is a DPWM diagram; and
FIG. 2 is a voltage waveform output in a motor control method according to a specific embodiment of the present invention.

**DETAILED DESCRIPTION OF THE EMBODIMENTS**

The technical content, achieved objectives and effects of the present invention are described in detail below with reference to the embodiments and the accompanying drawings.

Embodiment 1

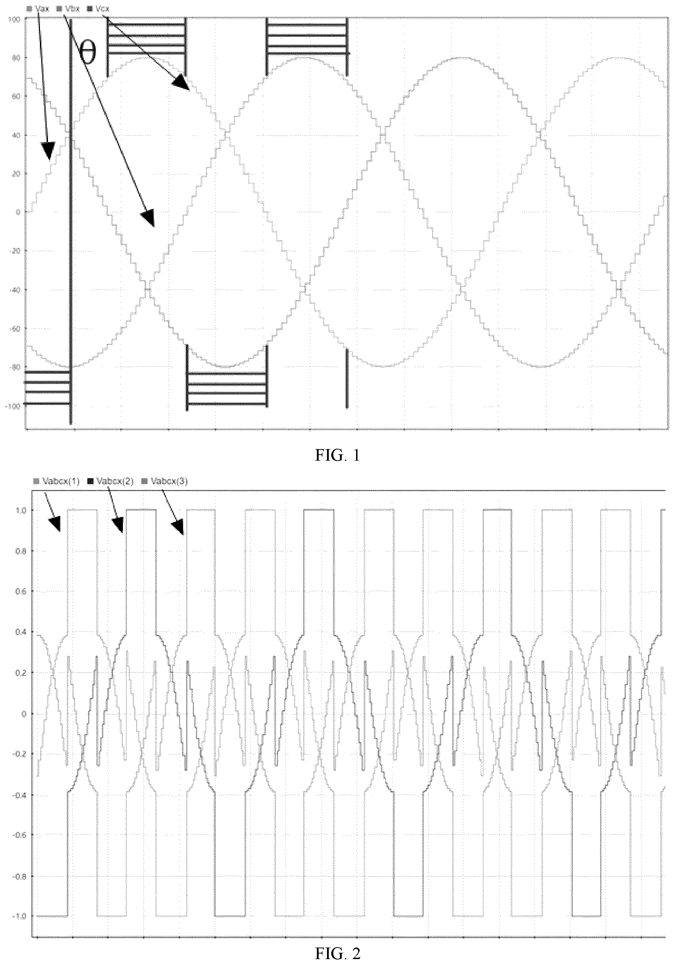

Referring to FIG. 1 and FIG. 2, a motor control method, including:

presetting a three-phase voltage of a motor to meet the requirements of a formula (1):

$$\begin{cases} u_{an} = U\cos(\omega t) + u_{zero} = u_{ao} + u_{zero} \\ u_{bn} = U\cos\left(\omega t - \frac{2}{3}\pi\right) + u_{zero} = u_{bo} + u_{zero} \\ u_{cn} = U\cos\left(\omega t + \frac{2}{3}\pi\right) + u_{zero} = u_{co} + u_{zero} \end{cases} \qquad \text{formula (1)}$$

presetting a three-phase current of the motor to meet the requirements of a formula (2):

$$\begin{cases} i_{an} = I\cos(wt + \varphi) \\ i_{bn} = I\cos\left(\omega t - \frac{2}{3}\pi + \varphi\right) + u_{zero} \\ i_{cn} = I\cos\left(\omega t + \frac{2}{3}\pi + \varphi\right) + u_{zero} \end{cases} \qquad \text{formula (2)}$$

where $\varphi$ is a power factor angle (a phase difference between a voltage vector and a current vector of a motor controller); and $u_{zero}$ is a zero sequence voltage component, and different modulation control modes can be implemented by selecting different types of zero sequence components.

When $u_{zero} = 0$, an SPWM control mode is used.

When $u_{zero} = u\cos(3\omega t)$, an SVPWM control mode is used.

The basic principle of DPWM control is to ensure that when a reference output voltage of a certain phase is within 3 of a cycle, that is, within an interval of 120°, the action of a switching tube does not occur, which ensures that the switching loss of a system can be reduced by $\frac{1}{3}$ compared with that in SVPWM.

The action of the switching tube in an ordinary DPWM solution is not combined with the magnitude of an output current, so the action of the switching tube exists under a high current, resulting in the high loss of the system; or as mentioned above, there is drive control of a certain modulation mode, such as a DPWM1 mode. At this time, in order to ensure that the system has no switching action under the maximum current, it is required to use a constant power control mode and ensure that the power factor angle is always 1. However, in such a control mode, the system is not most efficient when operating at other time.

Therefore, the technical solution of the present invention avoids the defects existing in the switching process, and ensures the minimum loss and maximum efficiency of the system by dynamically adjusting a switching time sequence of the motor controller in combination with the power factor angle during the operation of the system.

As shown in FIG. 1, an angle $\theta = \frac{\pi}{6} + \varphi$ is adjusted on the basis of DPWM control to move a modulation interval of a voltage waveform.

When the power factor angle is 0, a voltage output and a current output maintain a same phase; and a same zero sequence voltage is expressed as a formula (3):

$$\begin{cases} |u_{xo}| = \max(|u_{ao}|, |u_{bo}|, |u_{co}|) \\ u_{zero} = (sgn(v_{xo}))\frac{u_{dc}}{2} - u_{xo} \end{cases} \qquad \text{formula (3)}$$

A command output voltage is expressed as a formula (4):

$$\begin{cases} u_{an} = u_{ao}\cos(\varphi) - \frac{(u_{co} - u_{bo})}{\sqrt{3}}\sin(\varphi) \\ u_{bn} = u_{bo}\cos(\varphi) + \left\{\frac{1}{2}\frac{(u_{co} - u_{bo})}{\sqrt{3}} - \frac{\sqrt{3}u_{ao}}{2}\right\}\sin(\varphi) \\ u_{cn} = u_{an} - u_{bn} \end{cases} \qquad \text{formula (4)}$$

When $\varphi = 0$, the waveform of the outputted three-phase voltage is as shown in FIG. 2.

Embodiment 2

A motor including a motor controller and a motor system, where the motor controller controls operation of the motor system by the motor control method according to Embodiment 1.

Embodiment 3

A vehicle including the motor according to Embodiment 2.

Embodiment 4

A storage medium storing a computer program for executing the motor control method according to Embodiment 1.

Embodiment 5

A computer, including a memory, a processor, and a computer program stored on the memory and executable on the processor, where when the processor executes the computer program, the motor control method according to Embodiment 1 is implemented.

The above descriptions are only the embodiments of the present invention, rather than limiting the scope of patent of the present invention. Any equivalent transformations made by using the content of the specification and the accompanying drawings of the present invention, directly or indirectly applied in related technical fields, are similarly included in the scope of patent protection of the present invention.

**Claims**

1. A motor control method, **characterized in that** it comprises:

    presetting a three-phase voltage of a motor to meet the requirements of a formula (1):

$$\begin{cases} u_{an} = U\cos\ (\omega t) \ + u_{zero} = u_{ao} + u_{zero} \\ u_{bn} = U\cos\ \left(\omega t - \frac{2}{3}\pi\right) \ + u_{zero} = u_{bo} + u_{zero} \\ u_{cn} = U\cos\ \left(\omega t + \frac{2}{3}\pi\right) \ + u_{zero} = u_{co} + u_{zero} \end{cases} \quad \text{formula (1)}$$

    presetting a three-phase current of the motor to meet the requirements of a formula (2):

$$\begin{cases} i_{an} = I\cos\ (wt + \varphi) \\ i_{bn} = I\cos\ \left(\omega t - \frac{2}{3}\pi + \varphi\right) \ + u_{zero} \\ i_{cn} = I\cos\ \left(\omega t + \frac{2}{3}\pi + \varphi\right) \ + u_{zero} \end{cases} \quad \text{formula (2)}$$

    wherein $\varphi$ is a power factor angle, and $u_{zero}$ is a zero sequence voltage component; and

    adjusting an angle $\theta = \frac{\pi}{6} + \varphi$ to move a modulation interval of a voltage waveform.

2. The motor control method according to claim 1, **characterized in that** when the power factor angle is 0, a voltage output and a current output maintain a same phase; and
    a same zero sequence voltage is expressed as a formula (3):

$$\begin{cases} |u_{xo}| = \max\ (|u_{ao}|\ ,\ |u_{bo}|\ ,\ |u_{co}|) \\ u_{zero} = \ (sgn\ (v_{xo})) \ \frac{u_{dc}}{2} - u_{xo} \end{cases} \quad \text{formula (3)}.$$

3. The motor control method according to claim 2, **characterized in that** a command output voltage is expressed as a formula (4):

$$\begin{cases} u_{an} = u_{ao}\cos\ (\varphi) \ - \frac{(u_{co} - u_{bo})}{\sqrt{3}}\sin\ (\varphi) \\ u_{bn} = u_{bo}\cos\ (\varphi) \ + \left\{ \frac{1}{2}\frac{(u_{co} - u_{bo})}{\sqrt{3}} - \frac{\sqrt{3}u_{ao}}{2} \right\}\sin\ (\varphi) \qquad \text{formula (4).} \\ u_{cn} = u_{an} - u_{bn} \end{cases}$$

4. The motor control method according to claim 1, **characterized in that** when $u_{zero} = 0$, a sine pulse width modulation (SPWM) control mode is used.

5. The motor control method according to claim 4, **characterized in that** when the SPWM control mode is used, a reference output voltage of a certain phase is within 3 of a cycle.

6. The motor control method according to claim 1, **characterized in that** when $u_{zero}$ = ucos(3 cot), a space vector pulse width modulation (SVPWM) control mode is used.

7. A motor, **characterized in that** it comprises a motor controller and a motor system, wherein the motor controller controls operation of the motor system by the motor control method according to any one of claims 1 to 6.

8. A vehicle, **characterized in that** it comprises the motor according to claim 7.

9. A storage medium, **characterized in that** the storage medium stores a computer program for executing the motor control method according to any one of claims 1 to 6.

10. A computer comprising a memory, a processor, and a computer program stored on the memory and executable on the processor, **characterized in that**, when the processor executes the computer program, the motor control method according to any one of claims 1 to 6 is implemented.

FIG. 1

FIG. 2

## INTERNATIONAL SEARCH REPORT

| | International application No. |
|---|---|
| | **PCT/CN2022/111852** |

**A. CLASSIFICATION OF SUBJECT MATTER**

H02P 21/14(2016.01)i; H02P 21/22(2016.01)i

According to International Patent Classification (IPC) or to both national classification and IPC

**B. FIELDS SEARCHED**

Minimum documentation searched (classification system followed by classification symbols)

H02P

Documentation searched other than minimum documentation to the extent that such documents are included in the fields searched

Electronic data base consulted during the international search (name of data base and, where practicable, search terms used)

CNTXT; ENTXT; ENTXTC; DWPI; WPABS; CNKI: 零序, 电压, 功率因数, 相位角, SPWM, SVPWM, zero, voltage, power factor, angle

**C. DOCUMENTS CONSIDERED TO BE RELEVANT**

| Category* | Citation of document, with indication, where appropriate, of the relevant passages | Relevant to claim No. |
|---|---|---|
| PX | CN 114244229 A (BEIJING NATIONAL NEW ENERGY AUTOMOBILE TECHNOLOGY INNOVATION CENTER LIMITED COMPANY) 25 March 2022 (2022-03-25) claims 1-10 | 1-10 |
| Y | CN 110557039 A (LSIS CO., LTD.) 10 December 2019 (2019-12-10) description, paragraphs 39-173, and figures 1-13 | 1-10 |
| Y | CN 111082688 A (INSTITUTE OF ELECTRICAL ENGINEERING, CHINESE ACADEMY OF SCIENCES) 28 April 2020 (2020-04-28) description, paragraphs 88-98 | 1-10 |
| A | US 9654028 B1 (EATON CORP.) 16 May 2017 (2017-05-16) entire document | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 September 2022** | **30 September 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2022/111852**

| Patent document cited in search report | | | Publication date (day/month/year) | Patent family member(s) | | | Publication date (day/month/year) |
|---|---|---|---|---|---|---|---|
| CN | 114244229 | A | 25 March 2022 | None | | | |
| CN | 110557039 | A | 10 December 2019 | EP | 3576286 | A1 | 04 December 2019 |
| | | | | US | 10498216 | B1 | 03 December 2019 |
| | | | | JP | 2019213442 | A | 12 December 2019 |
| | | | | KR | 20190136501 | A | 10 December 2019 |
| | | | | US | 2019372453 | A1 | 05 December 2019 |
| | | | | KR | 102109574 | B1 | 12 May 2020 |
| | | | | JP | 6695598 | B2 | 20 May 2020 |
| | | | | CN | 110557039 | B | 02 November 2021 |
| CN | 111082688 | A | 28 April 2020 | CN | 111082688 | B | 30 October 2020 |
| US | 9654028 | B1 | 16 May 2017 | None | | | |

Form PCT/ISA/210 (patent family annex) (January 2015)